Europäisches Patentamt

European Patent Office

Office européen des brevets

(19)

(11) Numéro de publication: **0 070 769**
**A1**

# (12) DEMANDE DE BREVET EUROPEEN

(21) Numéro de dépôt: **82401321.3**

(22) Date de dépôt: **13.07.82**

(51) Int. Cl.³: **F 16 L 57/00,** F 16 L 58/10

(30) Priorité: **15.07.81 FR 8113738**

(43) Date de publication de la demande: **26.01.83**
**Bulletin 83/4**

(84) Etats contractants désignés: **BE CH DE GB IT LI NL**

(71) Demandeur: **Havas, Pierre Michel, 7 rue Pecquay,**
**F-75004 Paris (FR)**

(72) Inventeur: **Havas, Pierre Michel, 7 rue Pecquay,**
**F-75004 Paris (FR)**

(74) Mandataire: **Lemoine, Michel et al, 13 bld des**
**Batignolles, F-75008 Paris (FR)**

(54) **Tubes de canalisation, notamment pour produits abrasifs, et procédé de fabrication de ces tubes.**

(57) Un tube de canalisation comprend une partie interne plus particulièrement destinée à la résistance à l'abrasion et à la corrosion et une partie périphérique destinée notamment à lui conférer une résistance mécanique. La partie interne est réalisée en une résine synthétique chargée d'une charge d'un matériau dont la dureté MOHS est au moins égale à 7 et présentant un spectre de granulométrie étendu pour occuper un pourcentage très important du volume offert, la quantité de résine étant faible mais suffisante pour entourer pratiquement chaque particule et lier l'ensemble.

Tubes de canalisations, notamment pour produits abrasifs, et procédé de fabrication de ces tubes.

La présente invention a trait à des tubes de canalisations, et notamment de canalisations destinées au transport de produits abrasifs. Elle a également trait à un procédé de fabrication de ces tubes.

On sait que le transport de liquides ou de suspensions solides par canalisations prend de plus en plus d'ampleur. Ainsi, à titre d'exemple, en dehors du transport classique de produits tels que l'eau et le pétrole, on tend de plus en plus à transporter par canalisation des matières pondéreuses telles que des minerais, du charbon, des produits de carrière etc.

Les produits liquides, qu'il s'agisse du pétrole, de l'eau ou d'autres liquides circulant   soit pour le transport à longue distance, soit simplement pour différents usages dans des installations industrielles, contiennent souvent des impuretés sous forme de particules solides abrasives qui, à la longue, provoquent une abrasion des tubes utilisés dans les canalisations avec tous les inconvénients qui en résultent. Quant aux produits solides délibérément transportés par canalisation, sous forme de particules dont la taille peut être très variable transportées dans un liquide ou dans un gaz, ils tendent naturellement à provoquer une forte abrasion de la canalisation, en fonction notamment de leur dureté.

A titre d'exemple, ces produits solides peuvent être du charbon, des phosphates, du soufre, des minerais divers, du calcaire et autres produits de carrière, des déblais et toutes sortes de résidus. On comprend dans ces conditions que, en dehors des problèmes de résistance classiques à la corrosion, le problème de la résistance à l'abrasion devient crucial.

On a déjà proposé de résoudre ces problèmes en remplaçant les tubes métalliques usuellement employés par des tuyauteries en plastique renforcé de fibres de verre, ces plastiques pouvant contenir des additifs, tels que du sable, de l'alumine, des billes de verre etc. Ces canalisations ne donnent cependant pas toute satisfaction, notamment lorsqu'elles transportent des mélanges contenant des particules particulièrement abrasives.

Dans certains cas, on utilise alors des chemises internes résistantes à l'abrasion, placées dans les tubes. Ces chemises internes peuvent être par exemple réalisées en céramique dure ou, dans le cas de tubes métalliques, en basalte électrofondu présentant une grande dureté. De tels tubes présentent de bonnes qualités pour l'utilisation recherchée mais sont d'un prix de revient extrêmement élevé et d'un poids très important.

Pour la chemise interne on a également proposé (voir brevets US 3 794 081 et 3 888 714) de réaliser, sur une nappe textile fibreuse imprégnée de résine, une couche de résine recevant par projection une charge de particules résistantes à l'abrasion, en particulier des billes, et revêtues de préférence d'un revêtement métallique. Cependant, ces chemises ne présentent pas une résistance parfaite, notamment en raison de la granulométrie et des propriétés des particules. De plus la fabrication de tels tubes n'est pas particulièrement simple.

On a aussi déjà proposé d'utiliser un revêtement interne souple, par exemple en caoutchouc. Ces tubes présentent de bonnes caractéristiques dans certaines conditions de fonctionnement mais sont également difficiles à réaliser et peuvent en outre présenter des problèmes de corrosion, l'élastomère utilisé n'étant pas toujours compatible avec des produits circulant dans le tube.

La présente invention se propose donc de remédier à ces inconvénients et de fournir des tubes de canalisations, notamment pour produits abrasifs, présentant une très grande résistance à l'abrasion pour un poids peu élevé.

Un autre objectif de l'invention est de réali- ser de tels tubes qui résistent également à la corrosion.

Un autre objectif de l'invention est de fournir de tels tubes qui soient faciles à fabriquer par un procédé économique.

L'invention a pour objet un tube de canalisation, notamment pour produits abrasifs, comprenant une partie interne plus particulièrement destinée à la résistance à l'abrasion et à la corrosion et une partie périphérique destinée notamment à conférer une résistance mécanique, caractérisé en ce que la partie interne est réalisée par une résine synthétique chargée d'une charge d'un matériau dont la dureté MOHS est au moins égale à 7 et présentant un spectre de granulométrie étendu pour occuper un pourcentage très important du volume qui lui est offert, la quantité de résine étant aussi faible que possible mais suffisante pour entourer pratiquement chaque particule et lier l'ensemble.

La résine synthétique utilisée est, dans une forme de réalisation particulièrement préférée et avantageuse de l'invention, une résine époxy telle qu'une résine époxy préparée par condensation d'épichlorhydrine et de bisphénol A ou F ou de leur mélange et/ou la résine époxy désignée par "novolac époxydé modifié", la résine formant un système époxy par réaction avec un durcisseur convenable, notamment préparé à partir d'amines aromatiques, eutectiques et leurs adducts et/ou des durcisseurs anhydrides ou anhydrides modifiés.

Le pourcentage en poids du système époxy est de préférence de l'ordre de 15% du poids total de la partie interne avec une variation de plus ou moins 5%.

D'une façon générale, les caractéristiques des systèmes époxy utilisés sont telles qu'ils présentent une bonne caractéristique de mouillage des grains formant la charge et une bonne résistance à la corrosion et aux attaque chimiques.

On constate en outre que les systèmes époxy précités, utilisés avec les charges correspondantes, présentent une très bonne résistance à la température, y compris aux températures élevées, et une très bonne résistance mécanique.

Les charges utilisées sont de préférence des charges telles que des particules, notamment sous forme de billes ou sphères de tailles diverses et/ou poudres, obtenues par électrofusion d'oxydes ayant une structure interne associant étroitement une phase cristalline d'oxyde de zirconium noyée dans une phase amorphe de silice. De tels produits sont par exemple vendus comme agents broyants sous la dénomination ER 120 par la société française SEPR à Neuilly-sur-Seine et ayant une dureté MOHS supérieure ou égale à 7.

Dans une autre forme de réalisation, ces charges peuvent avantageusement comprendre une poudre vendue par la même société sous la dénomination ALSING de 1681 dont la dureté MOHS est supérieure à 9, seule ou en mélange avec les billes ER 120.

Ainsi, d'une façon générale, on préfère des charges constituées de matériaux fondus comprenant une teneur importante d'oxyde de zirconium, de silice et éventuellement d'alumine.

De préférence, la granulométrie des charges est telle que la charge contient des particules allant d'une très petite dimension, telles que des particules de poudre ayant un diamètre de 2 µ, jusqu'à des billes ou particules sphériques de quelques millimètres, par exemple 3 mm, de diamètre. Toutefois, le diamètre des particules les plus grosses est au plus égal au tiers de l'épaisseur de la partie interne du tube.

Le spectre de granulométrie est de préférence un spectre du type FULLMER-BOLLOMEY permettant une occupation optimale de tout l'espace disponible par la charge. Ainsi, l'espace entre les particules de diamètre important est occupé par des particules de diamètre plus faible et ainsi de suite.

Conformément à une caractéristique particulièrement avantageuse de l'invention, la partie périphérique peut être étroitement reliée à la partie interne de façon à éviter tout risque de formation d'une séparation entre les deux parties et, conformément à une caractéristique préférée de l'invention, la partie périphérique est faite à l'aide d'une résine compatible avec la résine synthétique utilisée dans la partie interne et de préférence identique à celle-ci, la partie périphérique étant renforcée par un enroulement filamentaire noyé dans ladite résine.

De préférence, on utilise, pour l'enroulement filamentaire, des filaments de fibres de verre très fines en écheveaux. On peut cependant également utiliser des fils de verre.

En variante, on peut également utiliser, pour réaliser une armature, des fibres de carbone ou du matériau vendu sous la dénomination "KEVLAR" par la société DUPONT DE NEMOURS résidant aux Etats-Unis d'Amérique.

L'épaisseur de la partie périphérique est de préférence au moins égale à la moitié de l'épaisseur de la partie interne.

Les tubes de canalisations ainsi réalisés selon l'invention s'avèrent présenter non seulement une résistance exceptionnelle à l'abrasion et à la corrosion ainsi qu'à l'action simultanée de ces deux facteurs, mais également une grande résistance et stabilité à la température, dans une gamme allant de -50°C à plus de 200°C.

L'invention a également pour objet un procédé pour la fabrication de ces tubes, caractérisé en ce que l'on mouille les particules d'une charge ayant les caractéristiques précitées avec une quantité faible mais suffisante de la résine synthétique pour obtenir un mouillage pratiquement complet de chaque particule de façon à former une pâte, que l'on met une couche de cette pâte, ayant une épaisseur déterminée, autour d'un mandrin destiné à donner la forme de la lumière interne du tube, que l'on enroule autour de la couche ainsi formée une pluralité de couches de filaments imprégnés de résine de façon à obtenir une adhérence par continuité de matière mais sans modifier sensiblement l'épaisseur de la couche formant la partie interne, puis que l'on procède au durcissement de l'ensemble et au retrait du mandrin.

D'autres avantages et caractéristiques de l'invention apparaîtront à la lecture de la description suivante, faite à titre d'exemple non limitatif.

EXEMPLE :

On utilise pour la charge les particules dénommées "ER 120" et "ALSING de 1681" précitées contenant principalement 69% d'oxyde de zirconium et 31% de silice et faisant un poids au litre d'environ 2,5 kg. Ces particules se présentent sous forme sphérique à surface lisse ayant un diamètre allant jusqu'à 1,6 mm.

La granulométrie en poids est la suivante :
- 22,5% de billes de 1 à 1,6 mm
- 22,5% de billes de 0,5 à 1 mm
- 12,5% de billes de 250 à 500 $\mu$
- 12,5% de billes de 125 à 250 $\mu$
- 30% de poudre ALSING de 0 à 200 $\mu$.

La résine synthétique époxy utilisée est la résine vendue sous la marque "RESABRAL" par la société HAVAS INDUSTRIE demeurant à Garonor, France, et composée d'un mélange de résine époxy préparée par condensation d'é- pichlorhydrine et de bisphénol A ou F ou de leur mélange avec un durcisseur type MDA ou MNA obtenu à partir d'amines aromatiques eutectiques.

On malaxe dans un mélangeur ou malaxeur un mélange de la résine et de la charge à raison d'environ 15% en poids de résine et 85% en poids de charge. Le malaxage s'effectue pendant quelques heures jusqu'à ce que chaque particule soit pratiquement mouillée par la résine. On ajoute en temps voulu le durcisseur dans la proportion déterminée par les calculs stoechiométriques.

Après avoir encore effectué un malaxage pendant quelques minutes, on applique le mélange obtenu sur un mandrin cylindrique horizontal ayant un diamètre de 300 mm préalablement recouvert d'une couche d'un fin tissu de verre perméable imprégné de la résine. On réalise ainsi sur le mandrin une couche cylindrique de ce mélange de charge et de résine ayant une épaisseur de 5 mm. Après avoir régularisé l'épaisseur de façon à la rendre constante, on enroule sur cette couche une seule couche de ce tissu perméable imprégné de résine. Ensuite, par la technique d'enroulement habituelle, on enroule, sur la couche revêtue de son tissu, des filaments très fins de fibres de verre imprégnés de la même résine avec le durcisseur, avec un pas adéquat, le premier enroulement étant recouvert d'un second enroulement avec un pas identique en sens contraire et ainsi de suite jusqu'à obtenir, par enroulements superposés et croisés, une épaisseur de partie externe de 4 mm.

On procède ensuite au durcissage de l'ensemble par étuvage.

0070769

# REVENDICATIONS

1.- Tube de canalisation, notamment pour produits abrasifs, comprenant une partie interne plus particulièrement destinée à la résistance à l'abrasion et/la corrosion et comportant une résine chargée de particules anti-abrasives de tailles différentes et une partie périphérique destinée notamment à conférer une résistance mécanique, caractérisé en ce que la partie interne est réalisée en une résine synthétique chargée d'une charge d'un matériau dont la dureté MOHS est au moins égale à 7 et présentant un spectre de granulométrie étendu pour occuper un pourcentage très important du volume offert, la quantité de résine étant faible mais suffisante pour entourer pratiquement chaque particule et lier l'ensemble.

2.- Tube selon la revendication 1, caractérisé en ce que la résine est une résine époxy.

3.- Tube selon la revendication 2, caractérisé en ce que la résine époxy contient une résine préparée par condensation d'épichlorhydrine et de bisphénol A ou F ou de leur mélange et/ou la résine époxy "novolac époxydé modifié", formant un système époxy avec un durcisseur convenable.

4.- Tube selon l'une quelconque des revendications 1 à 3, caractérisé en ce que le poids de résine est de l'ordre de 15% du poids total de la partie interne, avec une variation de plus ou moins 5%.

5.- Tube selon l'une quelconque des revendications 1 à 4, caractérisé en ce que la charge comprend des particules constituées de matériaux fondus comprenant une teneur importante d'oxyde de zirconium, de silice et éventuellement d'alumine.

6.- Tube selon la revendication 5, caractérisé en ce que la charge comprend des particules sphériques vendues sous le dénomination ER 120.

7.- Tube selon l'une quelconque des revendications 1 à 6, caractérisé en ce que la charge comprend des particules de poudre vendues sous la dénomination Alsing de 1681.

00 70769

8.- Tube selon l'une quelconque des revendications 1 à 7, caractérisé en ce que le diamètre des particules les plus grandes n'est pas supérieur au tiers de l'épaisseur de ladite partie interne.

9.- Tube selon l'une quelconque des revendications 1 à 8, caractérisé en ce que la partie périphérique est faite à l'aide d'une résine compatible avec, et notamment identique à, la résine de la partie interne et comporte des enroulements filamentaires noyés dans la résine.

10.- Procédé de fabrication d'un tube selon la revendication 9, caractérisé en ce que l'on malaxe un mélange de résine et de charge jusqu'à obtenir un mouillage complet des particules de la charge, que l'on réalise sur un mandrin une couche cylindrique à l'aide de ce mélange, que l'on enroule sur ladite couche un matériau filamentaire, notamment en fibres de verre, de carbone ou de KEVLAR, imprégné de résine, puis que l'on procède au durcissage et à l'enlèvement du mandrin.

Office européen
des brevets

**RAPPORT DE RECHERCHE EUROPEENNE**

Numéro de la demande

EP  82  40  1321

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X,D | US-A-3 888 714  (FISER)<br><br>* En entier *<br><br>--- | 1-6,8-10 | F 16 L  57/00<br>F 16 L  58/10 |
| X | US-A-4 169 906  (HALLSTROM)<br><br>* En entier *   .<br><br>----- | 1-6,8-10 | |

**DOMAINES TECHNIQUES RECHERCHES (Int. Cl. ³)**

F 16 L
B 29 D

Le présent rapport de recherche a été établi pour toutes les revendications

| Lieu de la recherche | Date d'achèvement de la recherche | Examinateur |
|---|---|---|
| LA HAYE | 09-09-1982 | ANGIUS P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03. 82